# EUROPEAN PATENT SPECIFICATION

(11) **EP 2 643 638 B1**
(45) Date of publication and mention of the grant of the patent: **03.06.2015**
(21) Application number: 11790801.2
(22) Date of filing: 21.11.2011
(51) Int. Cl.: F24D 19/10, F24H 9/20

(54) **APPARATUS AND METHODS FOR MONITORING A HOT WATER TANK OF A HOT WATER HEATING SYSTEM TO IMPROVE ITS ENERGY EFFICIENCY**
VORRICHTUNGEN UND VERFAHREN ZUM ÜBERWACHEN EINES WARMWASSERSPEICHERS EINER WARMWASSERHEIZUNG, UM DIE ENERGIEEFFIZIENZ ZU VERBESSERN
APPAREIL ET MÉTHODES DE SURVEILLANCE D'UN BALLON D'EAU CHAUDE D'UN SYSTÈME DE CHAUFFAGE DE BALLON D'EAU CHAUDE POUR AMÉLIORER SON RENDEMENT ÉNERGÉTIQUE

(30) Priority: 22.11.2010 GB 201019758; 24.11.2010 GB 201019918; 06.07.2011 GB 201111538
(43) Date of publication of application: 02.10.2013
(73) Proprietor: Passivsystems Limited, Newbury, Berkshire RG14 2PZ (GB)
(72) Inventor: ROBERTS, Peter, Newbury Berkshire RG14 2PZ (GB); FOTHERBY, Chloe, Newbury Berkshire RG14 2PZ (GB); AWASTHI, Vivek, Newbury Berkshire RG14 2PZ (GB)
(74) Representative: Sharrock, Daniel John
(86) International application number: PCT/GB2011/052281
(87) International publication number: WO 2012/069815

(56) References cited:
- WO-A1-00/58668
- WO-A2-2010/031994
- US-A- 5 956 462
- US-A- 5 968 393
- US-A1- 2004 177 817

## Description

### Field of the invention

The present invention relates to apparatus and methods for monitoring a hot water tank of a hot water heating system, particularly with a view to minimising the energy consumed in supplying sufficient hot water.

### Background to the invention

A conventional hot water heating system typically uses a tank thermostat and a programme-based timer to control boiler firing in order to maintain the water in the tank at the desired temperature. The user of the system is provided with a means of specifying the desired temperature and a simple timer to set when the water should be kept at the specified temperature. The thermostat senses the temperature of the water inside the cylinder. It switches on the water heating when the temperature falls below the set temperature, and switches off once the settings have been reached.

Such conventional systems continuously regenerate hot water or heat the water during a repeating user-defined schedule, and expend more heat energy than is necessary, regardless of the actual demand for hot water.

US 2004/0177817 discloses a water heating control arrangement that can involve regulating the rate of heating having regard to anticipated water usage requirements.

### Summary of the invention

The present invention provides apparatus for monitoring a hot water tank of a hot water heating system, comprising:
at least two tank temperature sensors for sensing the temperature at at least two different tank heights and generating respective sensor signals in response to the sensed temperatures;
a processing arrangement configured to receive the tank sensor signals, determine therefrom a hot water level parameter value which is indicative of the proportion of the total volume of water in the tank which is above a predetermined temperature threshold, and output the hot water level parameter value; and
an electronic memory for receiving and storing the hot water level parameter value, wherein the processing arrangement is arranged to calculate the volume of hot water usage against time with reference to the tank sensor signals, and wherein the processing arrangement is configured to calculate the volume of hot water usage in a predetermined period during a repeating usage cycle, and determine when the water in the tank should be heated such that said volume of hot water is provided during the predetermined period.

For example, the repeating usage cycle may equate to a day, a week or a month. Once the volume of hot water used in a predetermined period within the cycle is known, the hot water heating system may be controlled to heat the water in the hot water tank appropriately to ensure that sufficient hot water is available during the next occurrence of that period (that is, during the next repetition of the usage cycle). This may involve heating the water prior to the predetermined period, and may also involve heating the water during the period as well.

In a further embodiment, the processing arrangement may be configured to determine when the water in the tank should be heated, such that said volume of hot water is provided during the predetermined period plus an additional volume of hot water as a contingency measure. The size of this additional volume of hot water may be adjusted over time by the processing arrangement having regard to the tank sensor signals during a subsequent occurrence (or occurrences) of the predetermined period. For example, it may be reduced (or increased) if the hot water consumption within the predetermined period is less than (or greater than) the volume provided when the contingency amount is included. These adjustments may be made incrementally over time as the number of occurrences of the predetermined period on which the calculations are based increases, if a substantially consistent pattern of usage emerges.

The processing arrangement may be configured to determine when the predicted volume of hot water required during the remainder of the current period of hot water usage is approaching or substantially equal to the hot water capacity of the tank, and generate an output signal in response thereto. As discussed further below, it may be advantageous in terms of energy efficiency to initiate heating the tank at this stage until the full tank volume is heated to at least the desired hot water temperature. Accordingly, the processing arrangement may be configured to generate an output signal to trigger heating of the hot water at this stage.

Preferably, the hot water tank monitoring apparatus includes at least three tank temperature sensors for sensing the temperature at at least three different tank heights and generating respective sensor signals in response to the monitored temperatures for receipt by the processing arrangement.

The hot water level parameter calculated by the processing arrangement with reference to the tank sensor signals may be substantially proportional to the proportion of the tank volume which is above a predetermined temperature threshold.

In embodiments, the processing arrangement may be configured to calculate a completion time parameter value having regard to the tank sensor signals, wherein the completion time parameter is related to the time it will take to heat the water in the tank until substantially all the water in the tank is above a predetermined temperature threshold.

The processing arrangement may be configured to calculate a heating rate parameter value for the hot tank having regard to the tank sensor signals, wherein the heating rate parameter is related to the rate at which the volume of water in the tank that is above a predetermined temperature threshold increases during heating of the water. Preferably, the heating rate parameter value is adjusted over time having regard to the tank sensor signals, to give a more accurate value by reference to signals received over a longer period of time. In some embodiments, the completion time parameter value may be calculated with reference to the heating rate parameter value.

Apparatus embodying the invention may include a user interface for communicating to a user at least one of: the hot water level parameter value, the completion time parameter value, and the heating rate parameter value.

Preferably the tank sensors are arranged over the height dimension of the tank so as to substantially minimise the vertical distance between any part of the tank and the nearest sensor. More particularly, the tank sensors may be arranged so as to substantially minimise the vertical distance between any part of the effective height of the tank and the nearest sensor.

The processing arrangement may be configured to calculate the volume of hot water usage against time with reference to the hot water level parameter.

The processing arrangement may be configured to calculate the volume of hot water usage against time whilst taking account of the rate of heat loss from the tank to its surroundings.

The apparatus may include an outflow pipe temperature sensor for generating an output signal responsive to the temperature of or in an outflow pipe of a hot water tank, wherein the outflow pipe temperature sensor is used to detect when water is being drawn from the tank. The processing arrangement may be configured to calculate the rate of heat loss having regard to the output signal from the outflow pipe temperature sensor, as this is may be monitored to detect when water is being drawn from the tank. When water is being drawn, a reduction in the hot water level in the tank may therefore be largely attributable to the withdrawal of hot water rather than heat losses by other means.

The apparatus may be configured to distinguish between heat loss to its surroundings ("standing losses") and hot water usage by monitoring the vertical temperature profile of the water in the tank. Standing losses will tend to lead to a generally uniform reduction in temperature (albeit with slightly greater losses from hotter regions of the tank), whereas hot water usage will lead to the temperature profile shifting up the tank as cold water is fed in at the bottom of the tank.

The invention further provides a hot water heating system including this apparatus.

According to a further aspect, the invention provides method for monitoring a hot water tank of a hot water heating system, comprising the steps of:
generating signals responsive to the temperatures at at least two different tank heights;
receiving the signals in a processing arrangement and determining from the signals a hot water level parameter value which is indicative of the proportion of the total volume of water in the tank which is above a predetermined temperature threshold;
calculating in the processing arrangement the volume of hot water usage against time with reference to the tank sensor signals;
calculating in the processing arrangement the volume of hot water usage in a predetermined time during a repeating usage cycle, and determining when the water in the tank should be heated such that said volume of hot water is provided during the predetermined period;
outputting the hot water level parameter value from the processing arrangement; and
receiving and storing the hot water level parameter value in an electronic memory.

### Brief description of the drawings

Embodiments of the invention will now be described by way of example with reference to the accompanying schematic drawings, wherein:
Figures 1 and 2 are side views of water tanks with and without temperature sensors mounted thereon, respectively; and
Figures 3 and 4 are examples of graphics presented to a user on a display in accordance with an embodiment of the invention.

### Detailed description of the drawings

In order to avoid wasting energy, a system is provided that heats water when there is an estimated or predicted demand for hot water and also provides feedback to the user.

Apparatus embodying the invention provides a hot water control system suitable for supplying domestic hot water on demand whilst conserving fuel. It also provides significant information which helps the user to make judgements about using energy.

The information that the system provides may include the amount of usable water in the tank (water which is above or equal to the user's desired temperature) and the estimated amount of time to arrival at a full hot water tank whilst heating.

A hot water cylinder contains water at different temperatures (layered). The hotter water will accumulate at the top with progressively cooler water further down. This is known as stratification. When water in the tank is heated, the cold water is heated evenly. If there is a warm band at the top of the tank, the cooler band below is initially heated until it reaches the same temperature, and then the whole tank continues to heat evenly. When heating is not in progress and water is drawn from the tank, the cold water is drawn in at the bottom of the tank, leaving the top section hot, with the bottom section cold (thus forming stratified regions in the tank). However the intersection between cold and hot "mixes" forming a mixed band separating the hot and cold regions. This mixed band, although referred to as a "de-stratified band", does have its own temperature gradient ranging from hot at the top to cold at the bottom. The present system seeks to model this band to determine the level above which the water is at or above the desired temperature ("the tank level") as discussed below. The term "de-stratified band" is used herein to refer to the mixed band separating the hot and cold water.

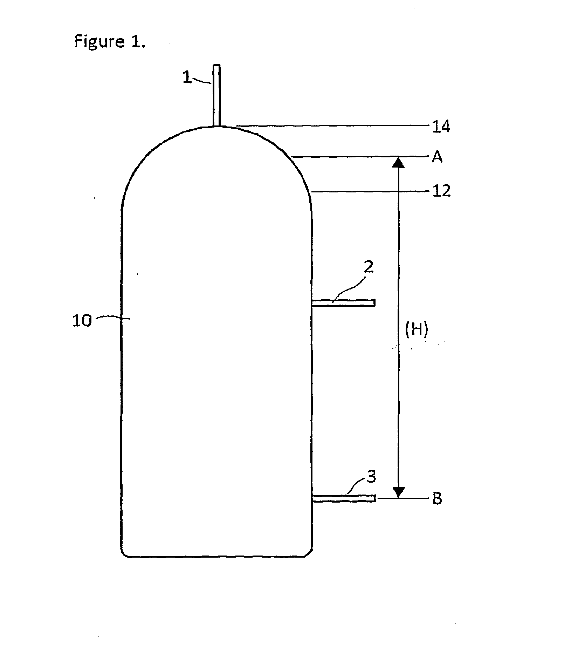

Figure 1 shows a typical hot water storage tank configuration. The tank 10 is generally cylindrical up to a height denoted 12 in the Figure, with a domed bell portion extending above this point. Hot water is drawn from the tank 10 via an outflow pipe 1 which is coupled to the uppermost point 14 on the domed portion. The water in the tank is replenished via a cold water inlet pipe (near the base of the tank (not shown). The water in the tank is heated by circulating heated fluid through a coiled pipe within the tank via inflow pipe 2 and outflow pipe 3.

The "useful" or "effective" height (H) of the tank is defined as substantially equivalent to the height of the tank above the lowest heating point if it had the same volume and a constant horizontal cross-sectional area. In Figure 1, this is the tank section between points A and B. A is approximately the midpoint between the physical top of the tank 14 and the start 12 of the bell curve of the domed portion, and point B is at lower pipe 3, which leads to the heating coil.

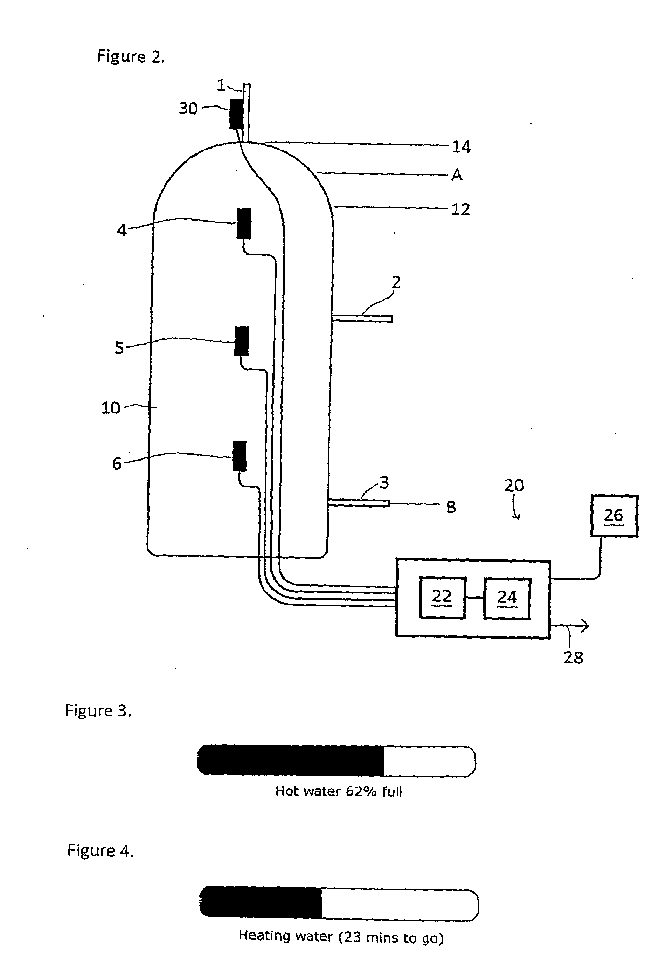

In a preferred embodiment of the present invention, the apparatus performs tank level estimation by using three temperature sensors on the tank. Figure 2 shows the placement of the temperature sensors on the tank. The three sensors 4, 5, 6 are preferably placed at location 1/6, 3/6, 5/6 of the distance between A and B, respectively.

The three sensors are communicatively coupled to a control arrangement 20. This includes a processing arrangement 22, an electronic memory 24 and a user interface device 26. The control arrangement is in turn communicatively coupled via link 28 to a heat generation system (not shown) for heating the water. It will be appreciated that these components may be communicatively coupled via either wired or wireless links.

The system models the de-stratified band that exists in the tank between the hot and cold water, where hot water is water that is the same or above the desired temperature. The system uses interpolation and extrapolation to estimate the point at which the temperature within the tank is at the desired temperature, and thus determine the "level" of the tank. The system continuously monitors the level and keeps the user informed via the user-interface device 26. This may be provided on a dedicated display device or a user's general purpose electronic device, for example. An example of the type of image that may present this information is shown in Figure 3.

Preferably, an apparatus embodying the invention adaptively learns the pattern of usage of hot water for every day of week and aims to only heat water when required (hence saving the energy).

The system may be arranged to learn the hot water demand for periods which are marked with an occupancy of "in" in a schedule specified by the user.

Alternatively, every day of the week can be divided into regular intervals (for example 10 minute or 30 minute intervals) and the hot water consumption can be profiled during each interval. The hot water consumption is worked out using the tank level at start and end of the period minus the heat loss. The system may model the heat loss from the tank by using a fourth sensor 30 placed on the outlet pipe 1 of the hot water cylinder (using multiple sensors if the cylinder has multiple outlet pipes). When no major fluctuation is seen on the outflow pipe, it means that water is not being drawn and the change in the hot water level is due to heat loss.

In another implementation, heat loss is estimated by measuring the ambient temperature outside the hot tank, with the rate of heat loss being dependent on the temperature difference between the water in the tank and the surroundings of the tank.

Continuous periods with no hot water consumption are known as periods of inactivity. The system aim is preferably controlled so as to have a cold tank at the start of each significant inactive period in order to save energy.

It is preferable only to heat the tank during an active period when the current hot water level is insufficient to meet the estimated demand before the end of that period. More particularly, it may be advantageous to monitor the predicted hot water demand for the remainder of the current "active" period of hot water usage. When this amount approaches, or is substantially equal to, the hot water capacity of the tank, the processing arrangement of the apparatus may be arranged to trigger heating of the tank so as to provide a full tank of hot water at this stage to meet the demand. This is therefore expected to result in the tank being substantially exhausted of hot water at the end of the active period. It then lies cold during the subsequent inactive period, minimising energy wastage through heat loss from unused heated water to the environment.

It will be appreciated that this technique takes account of the fact that a tank cannot be heated to readily provide only a fraction of its volume of hot water, as heating takes place evenly due to convection in the tank.

For example, if the hot water demand for a period is 1.5 tanks, the system will provide a full tank at the start of the period and when the tank level reaches half it will reheat the tank to full, ensuring that the tank is empty at the end of the period. As another example, if the tank level is below the estimated current demand (for example 70% and the estimated demand is 100% before the next inactive period), it would be preferable to heat the tank now, to maximise the energy savings through the inactive period by minimising the tank temperature during that period.

When the water in the tank is being heated, the system may also be configured to recursively learn the hot water heating rate by using the average temperature reported by the three sensors placed on the tank. The heating rate is learnt by determining how much time is taken to reach to the desired temperature from the current average temperature. The learnt heating rate information is used to provide feedback to the user regarding the progress of heating (which is continually updated). The estimated time of arrival to a full tank may be presented to user on a display device in the manner shown in Figure 4 for example.

The system may also be arranged to incorporate a buffer volume or a "safety net" whilst learning the demand for any period. It may add a contingency of say 30% onto the demand estimated to cover the risk of the user running out of hot water next time. The contingency may then be dropped incrementally (for example by 5% every week) to a minimum (such as 10%), if the hot water consumption remains within the estimated demand. The system may also be configured to detect erratic water consumption. In that event, it may raise the contingency incrementally, for example by 5%.

Although the embodiment of the invention depicted in Figure 2 and discussed above includes three tank temperature sensors, the invention may also be implemented using two, or four or more such sensors. De-stratified modeling may also be carried out using the signals from two sensors, albeit with reduced accuracy. Using four sensors (or more) provides more accuracy.

The "useful" or "effective" height of the tank should be divided equally into bands numbering the same as the number of sensors, and a sensor should preferably be placed close to the middle of each band. So for two sensors, if the useful tank height was 100cm, it would be divided into two bands each of 50cm. A sensor would be placed in the middle of each band, that is, at the 25cm and 75cm points. Placing them at 33cm and 66cm would mean that when the hot water level is at the top or bottom of the useful height, it is 33 cm away from the nearest sensor, but if the sensors are placed at 25cm and 75cm, the level can never be more that 25cm away from the nearest sensor.

As another illustration, if four sensors are employed, the useful height should be divided into four bands, with sensor placements at 12.5cm, 37.5cm, 62.5cm and 87.5cm from the lowest heating point.

Nevertheless, the sensors do not have to be placed exactly at the ideal locations. The de-stratification modeling works most accurately when the sensors are placed at the recommended locations. However, the modeling will still function, albeit perhaps with reduced accuracy, if they are not placed evenly. This could aid installation where it might not be possible to place the sensors accurately. Preferably, the actual locations of the sensors are fed back into the de-stratified modeling, so that the impairment to the level estimation is kept to a minimum.

## Claims

1. Apparatus for monitoring a hot water tank of a hot water heating system, comprising:
at least two tank temperature sensors for sensing the temperature at at least two different tank heights and generating respective sensor signals in response to the sensed temperatures;
a processing arrangement configured to receive the tank sensor signals, determine therefrom a hot water level parameter value which is indicative of the proportion of the total volume of water in the tank which is above a predetermined temperature threshold, and output the hot water level parameter value; and
an electronic memory for receiving and storing the hot water level parameter value, wherein the processing arrangement is arranged to calculate the volume of hot water usage against time with reference to the tank sensor signals, and wherein the processing arrangement is configured to calculate the volume of hot water usage in a predetermined period during a repeating usage cycle, and determine when the water in the tank should be heated such that said volume of hot water is provided during the predetermined period.

2. Apparatus of claim 1, wherein the processing arrangement is configured to determine when the water in the tank should be heated such that said volume of hot water is provided during the predetermined period, plus an additional volume of hot water as a contingency measure.

3. Apparatus of claim 2, wherein the size of the additional volume of hot water is adjusted over time by the processing arrangement having regard to the tank sensor signals during at least one subsequent occurrence of the predetermined period.

4. Apparatus of any preceding claim, wherein the processing arrangement is configured to determine when the predicted volume of hot water required during the remainder of the current period of hot water usage is substantially equal to the water capacity of the tank, and generate an output signal in response thereto.

5. Apparatus of claim 4, wherein the processing arrangement is configured, in response to said output signal, to generate a further output signal to trigger heating of the hot water until the full tank volume is heated to at least the desired hot water temperature.

6. Apparatus of any preceding claim, wherein the processing arrangement is configured to calculate a completion time parameter value having regard to the tank sensor signals, wherein the completion time parameter is related to the time it will take to heat the water in the tank until substantially all the water in the tank is above a predetermined temperature threshold.

7. Apparatus of any preceding claim, wherein the processing arrangement is configured to calculate a heating rate parameter value for the hot tank having regard to the tank sensor signals, wherein the heating rate parameter is related to the rate at which the volume of water in the tank that is above a predetermined temperature threshold increases during heating of the water.

8. Apparatus of claim 7, wherein the heating rate parameter value is adjusted over time having regard to the tank sensor signals.

9. Apparatus of any preceding claim, wherein the processing arrangement is configured to determine when the water in the tank should be heated such that the tank is substantially exhausted of hot water at the end of the predetermined period.

10. Apparatus of any preceding claim, wherein the processing arrangement is configured to calculate the volume of hot water usage against time with reference to the hot water level parameter.

11. Apparatus of any preceding claim, wherein the processing arrangement is configured to calculate the volume of hot water usage against time having regard to the rate of heat loss from the tank.

12. Apparatus of any preceding claim, including an outflow pipe temperature sensor for generating an output signal responsive to the temperature of or in an outflow pipe of a hot water tank, wherein the outflow pipe temperature sensor is used to detect when water is being drawn from the tank.

13. Apparatus of claim 12, wherein the processing arrangement is configured to calculate the rate of heat loss having regard to the output signal from the outflow pipe temperature sensor.

14. A hot water heating system including apparatus of any preceding claim.

15. A method for monitoring a hot water tank of a hot water heating system, comprising the steps of:
generating signals responsive to the temperatures at at least two different tank heights;
receiving the signals in a processing arrangement and determining from the signals a hot water level parameter value which is indicative of the proportion of the total volume of water in the tank which is above a predetermined temperature threshold;
calculating in the processing arrangement the volume of hot water usage against time with reference to the tank sensor signals;
calculating in the processing arrangement the volume of hot water usage in a predetermined time during a repeating usage cycle, and determining when the water in the tank should be heated such that said volume of hot water is provided during the predetermined period;
outputting the hot water level parameter value from the processing arrangement; and
receiving and storing the hot water level parameter value in an electronic memory.

## Patentansprüche

1. Vorrichtung zur Überwachung eines Warmwassertanks eines Warmwasser-Heizsystems, die Folgendes umfasst:
wenigstens zwei Tanktemperatursensoren zum Messen der Temperatur bei wenigstens zwei unterschiedlichen Tankhöhen und Erzeugen von entsprechenden Sensorsignalen in Reaktion auf die gemessenen Temperaturen;
eine Verarbeitungsanordnung, die konfiguriert ist, die Tanksensorsignale zu empfangen, daraus einen Warmwasserstand-Parameterwert zu bestimmen, der den Anteil des Gesamtvolumens von Wasser in dem Tank angibt, der über einem vorgegebenen Temperaturschwellenwert liegt, und den Warmwasserstand-Parameterwert auszugeben; und
einen elektronischen Speicher zum Empfangen und Speichern des Warmwasserstand-Parameterwerts, wobei die Verarbeitungsanordnung eingerichtet ist, das Volumen eines Warmwasserverbrauchs in Abhängigkeit von der Zeit in Bezug auf die Tanksensorsignale zu berechnen, und wobei die Verarbeitungsanordnung konfiguriert ist, das Volumen eines Warmwasserverbrauchs in einem vorgegebenen Zeitraum während eines wiederholten Nutzungszyklus zu berechnen und zu bestimmen, wann das Wasser in dem Tank erhitzt werden sollte, so dass das Volumen des Warmwassers während des vorgegebenen Zeitraums bereitgestellt wird.

2. Vorrichtung nach Anspruch 1, wobei die Verarbeitungsanordnung konfiguriert ist, zu bestimmen, wann das Wasser in dem Tank erhitzt werden sollte, so dass während des vorgegebenen Zeitraums das Warmwasservolumen plus ein zusätzliches Volumen an Warmwasser als eine Eventualmaßnahme bereitgestellt wird.

3. Vorrichtung nach Anspruch 2, wobei die Größe des zusätzlichen Warmwasservolumens mit der Zeit durch die Verarbeitungsanordnung in Bezug auf die Tanksensorsignale während wenigstens eines anschließenden Auftretens des vorgegebenen Zeitraums eingestellt wird.

4. Vorrichtung nach einem der vorhergehenden Ansprüche, wobei die Verarbeitungsanordnung konfiguriert ist, zu bestimmen, wann das vorhergesagte Warmwasservolumen, das während des verbleibenden Teils des laufenden Zeitraums eines Warmwasserverbrauchs erforderlich ist, im Wesentlichen gleich der Wasserkapazität des Tanks ist, und in Reaktion darauf ein Ausgangssignal zu erzeugen.

5. Vorrichtung nach Anspruch 4, wobei die Verarbeitungsanordnung konfiguriert ist, in Reaktion auf das Ausgangssignal ein weiteres Ausgangssignal zu erzeugen, um das Heizen des Warmwassers zu veranlassen, bis das gesamte Tankvolumen wenigstens auf die gewünschte Warmwassertemperatur erhitzt ist.

6. Vorrichtung nach einem der vorhergehenden Ansprüche, wobei die Verarbeitungsanordnung konfiguriert ist, einen Beendigungszeit-Parameterwert in Bezug auf die Tanksensorsignale zu berechnen, wobei sich der Beendigungszeit-Parameter auf die Zeit bezieht, die benötigt wird, um das Wasser in dem Tank zu erhitzen, bis im Wesentlichen das ganze Wasser in dem Tank über einem vorgegebenen Temperaturschwellenwert ist.

7. Vorrichtung nach einem der vorhergehenden Ansprüche, wobei die Verarbeitungsanordnung konfiguriert ist, einen Heizraten-Parameterwert für den Warmwassertank in Bezug auf die Tanksensorsignale zu berechnen, wobei sich der Heizratenparameter auf die Rate bezieht, mit der das Volumen des Wassers in dem Tank, das über einem vorgegebenen Temperaturschwellenwert liegt, während eines Heizens des Wassers zunimmt.

8. Vorrichtung nach Anspruch 7, wobei der HeizratenParameterwert in Bezug auf die Tanksensorsignale mit der Zeit eingestellt wird.

9. Vorrichtung nach einem der vorhergehenden Ansprüche, wobei die Verarbeitungsanordnung konfiguriert ist, zu bestimmen, wann das Wasser in dem Tank erhitzt werden sollte, so dass der Tank am Ende des vorgegebenen Zeitraums im Wesentlichen von Warmwasser geleert ist.

10. Vorrichtung nach einem der vorhergehenden Ansprüche, wobei die Verarbeitungsanordnung konfiguriert ist, das Volumen des Warmwasserverbrauchs in Abhängigkeit von der Zeit in Bezug auf den Warmwasserstandparameter zu berechnen.

11. Vorrichtung nach einem der vorhergehenden Ansprüche, wobei die Verarbeitungsanordnung konfiguriert ist, das Volumen eines Warmwasserverbrauchs in Abhängigkeit von der Zeit in Bezug auf die Wärmeverlustrate des Tanks zu berechnen.

12. Vorrichtung nach einem der vorhergehenden Ansprüche, die einen Auslassleitung-Temperatursensor zum Erzeugen eines Ausgangssignals in Reaktion auf die Temperatur einer Auslassleitung oder in einer Auslassleitung eines Warmwassertanks umfasst, wobei der Auslassleitung-Temperatursensor verwendet wird, zu erfassen, wenn Wasser von dem Tank entnommen wird.

13. Vorrichtung nach Anspruch 12, wobei die Verarbeitungsanordnung konfiguriert ist, die Wärmeverlustrate in Bezug auf das Ausgangssignal von dem Auslassleitung-Temperatursensor zu berechnen.

14. Warmwassersystem, das eine Vorrichtung nach einem der vorhergehenden Ansprüche enthält.

15. Verfahren zum Überwachen eines Warmwassertanks eines Warmwasserheizsystems, wobei das Verfahren die folgenden Schritte umfasst:
Erzeugen von Signalen in Reaktion auf die Temperaturen bei wenigstens zwei verschiedenen Tankhöhen;
Empfangen der Signale in einer Verarbeitungsanordnung und Bestimmen eines Warmwasserstand-Parameterwerts aus den Signalen, der den Anteil des Gesamtwasservolumens in dem Tank angibt, der über einem vorgegebenen Temperaturschwellenwert liegt;
Berechnen in der Verarbeitungsanordnung des Volumens eines Warmwasserverbrauchs in Abhängigkeit von der Zeit in Bezug auf die Tanksensorsignale;
Berechnen in der Verarbeitungsanordnung des Volumens eines Warmwasserverbrauchs in einem vorgegebenen Zeitraum während eines wiederholten Nutzungszyklus, und Bestimmen, wann das Wasser in dem Tank erhitzt werden sollte, so dass das Warmwasservolumen während des vorgegebenen Zeitraums bereitgestellt wird;
Ausgeben des Warmwasserstand-Parameterwerts von der Verarbeitungsanordnung; und
Empfangen und Speichern des Warmwasserstand-Parameterwerts in einem elektronischen Speicher.

## Revendications

1. Appareil pour surveiller un ballon d'eau chaude d'un système de chauffage d'eau chaude, comprenant :
au moins deux capteurs de température de ballon destinés à capter la température à au moins deux hauteurs de ballon différentes et générer des signaux de capteur respectifs en réponse aux températures captées ;
un agencement de traitement configuré pour recevoir les signaux de capteur de ballon, déduire des signaux une valeur d'un paramètre de niveau d'eau chaude indiquant la proportion du volume total d'eau dans le ballon dont la température est supérieure à un seuil de température prédéfini et produire en sortie la valeur du paramètre de niveau d'eau ; et
une mémoire électronique destinée à recevoir et enregistrer la valeur du paramètre de niveau d'eau chaude, l'agencement de traitement étant conçu pour calculer le volume d'utilisation d'eau chaude en fonction du temps en référence aux signaux de capteur de ballon, et l'agencement de traitement étant configuré pour calculer le volume d'utilisation d'eau chaude dans une période prédéfinie au cours d'un cycle d'utilisation répété et établir lorsqu'il convient de chauffer l'eau dans le ballon de manière à fournir ledit volume d'eau chaude au cours de la période prédéfinie.

2. Appareil selon la revendication 1, dans lequel l'agencement de traitement est configuré pour établir lorsqu'il convient de chauffer l'eau dans le ballon de manière à fournir ledit volume d'eau chaude au cours de la période prédéfinie majoré d'un volume supplémentaire d'eau chaude à titre de mesure de prévoyance.

3. Appareil selon la revendication 2, dans lequel la taille du volume supplémentaire d'eau chaude est ajustée au fil du temps par l'agencement de traitement au regard des signaux de capteur de ballon au cours d'au moins une apparition consécutive de la période prédéfinie.

4. Appareil selon l'une quelconque des revendications précédentes, dans lequel l'agencement de traitement est configuré pour établir lorsque le volume prédit d'eau chaude requis au cours du restant de la période actuelle d'utilisation d'eau chaude est sensiblement égal à la capacité d'eau du ballon et générer, en réponse, un signal de sortie.

5. Appareil selon la revendication 4, dans lequel l'agencement de traitement est configuré, en réponse audit signal de sortie, pour générer un autre signal de sortie pour déclencher le chauffage de l'eau chaude jusqu'à ce que le volume entier du ballon soit chauffé au moins à la température d'eau chaude souhaitée.

6. Appareil selon l'une quelconque des revendications précédentes, dans lequel l'agencement de traitement est configuré pour calculer une valeur d'un paramètre de temps d'achèvement au regard des signaux de capteur de ballon, le paramètre de temps d'achèvement étant relatif au temps pris pour chauffer l'eau dans le ballon jusqu'à ce que sensiblement toute l'eau dans le ballon atteigne une température supérieure à un seuil de température prédéfini.

7. Appareil selon l'une quelconque des revendications précédentes, dans lequel l'agencement de traitement est configuré pour calculer une valeur d'un paramètre de vitesse de chauffage pour le ballon d'eau chaude au regard des signaux de capteur de ballon, le paramètre de vitesse de chauffage étant relatif à la vitesse d'augmentation du volume d'eau dans le ballon dont la une température est supérieure à un seuil de température prédéfini au cours du chauffage de l'eau.

8. Appareil selon la revendication 7, dans lequel la valeur du paramètre de vitesse de chauffage est ajustée au fil du temps au regard des signaux de capteur de ballon.

9. Appareil selon l'une quelconque des revendications précédentes, dans lequel l'agencement de traitement est configuré pour établir lorsqu'il convient de chauffer l'eau dans le ballon de manière à ce que le ballon soit sensiblement vidé d'eau chaude à la fin de la période prédéfinie.

10. Appareil selon l'une quelconque des revendications précédentes, dans lequel l'agencement de traitement est configuré pour calculer le volume d'utilisation d'eau chaude en fonction du temps en référence au paramètre de niveau d'eau chaude.

11. Appareil selon l'une quelconque des revendications précédentes, dans lequel l'agencement de traitement est configuré pour calculer le volume d'utilisation d'eau chaude en fonction du temps au regard du taux de perte de chaleur dans le ballon.

12. Appareil selon l'une quelconque des revendications précédentes, comportant un capteur de température de tuyau de sortie destiné à générer un signal de sortie en réponse à la température d'un ou dans un tuyau de sortie d'un ballon d'eau chaude, le capteur de température de tuyau de sortie servant à détecter lorsque de l'eau est prélevée du ballon.

13. Appareil selon la revendication 12, dans lequel l'agencement de traitement est configuré pour calculer le taux de perte de chaleur au regard du signal de sortie provenant du capteur de température de tuyau de sortie.

14. Système de chauffage d'eau chaude comportant un appareil selon l'une quelconque des revendications précédentes.

15. Procédé pour surveiller un ballon d'eau chaude d'un système de chauffage d'eau chaude, comprenant les étapes consistant à :
générer des signaux en réponse à des températures à au moins deux hauteurs de ballon différentes ;
recevoir les signaux dans un agencement de traitement et déduire des signaux une valeur d'un paramètre de niveau d'eau chaude indiquant la proportion du volume total d'eau dans le ballon dont la température est supérieure à un seuil de température prédéfini ;
calculer dans l'agencement de traitement le volume d'utilisation d'eau chaude en fonction du temps en référence aux signaux de capteur de ballon ;
calculer dans l'agencement de traitement le volume d'utilisation d'eau chaude dans une période prédéfinie au cours d'un cycle d'utilisation répété et établir lorsqu'il convient de chauffer l'eau dans le ballon de manière à fournir ledit volume d'eau chaude au cours de la période prédéfinie ;
produire la valeur du paramètre de niveau d'eau chaude à la sortie de l'agencement de traitement ; et
recevoir et enregistrer la valeur du paramètre de niveau d'eau chaude dans une mémoire électronique.
